# EUROPÄISCHE PATENTANMELDUNG

(11) **EP 3 757 642 A1**
(43) Veröffentlichungstag der Anmeldung: **30.12.2020**
(21) Anmeldenummer: 20182606.2
(22) Anmeldetag: 26.06.2020
(51) Int. Cl.: G02B 6/44

(54) **KABEL-ROHRVERBAND, VERFAHREN ZUR HERSTELLUNG UND VERLEGUNG**

(30) Priorität: 28.06.2019 DE 102019117612
(71) Anmelder: Deutsche Telekom AG, 53113 Bonn (DE)
(72) Erfinder: ADAMY, Mirko, 10405 Berlin (DE); BRÜHL, Jörg, 65597 Hünfelden (DE); GEIS, Manfred, 61479 Glashütten-Schloßborn (DE); PELLENZ, Elmar, 55296 Lörzweiler (DE)
(74) Vertreter: Brandt & Nern Patentanwälte

(57) **Zusammenfassung**

Die Erfindung betrifft einen Kabel-Rohrverband (1) aus mehreren, durch einen Mantel (4) zusammengefassten Kunststoffrohren (2₁ - 2ₙ), welche jeweils ein in ihnen bewegliches Kommunikationskabel (3₁ - 3ₙ) aufnehmen, wobei der Kabel-Rohrverband (1) mit bereits herstellerseitig in die Kunststoffrohre (2₁ - 2ₙ) eingefügten Kommunikationskabeln (3₁ - 3ₙ) bereitgestellt wird. Die Bereitstellung eines Kommunikationskabels (3₁ - 3ₙ) zur Herstellung eines Kommunikationsanschlusses für jeweils eines von mehreren entlang einer Kabeltrasse (6) gelegenen Grundstücken (5₁ - 5ₙ) erfolgt durch Erdverlegung des Kabel-Rohrverbandes (1) in der Kabeltrasse (6), Schaffen einer ersten Öffnung im Mantel (4) des Kabel-Rohrverbandes (1), Schaffen einer zweiten Öffnung im Mantel (4) in einer Entfernung zur ersten Öffnung, die mindestens der Entfernung zwischen dieser und einem Kabelanschlusspunkt auf dem jeweiligen Grundstück (5₁ - 5ₙ) entspricht, Durchtrennen eines Kunststoffrohres (2₁ - 2ₙ) einschließlich des aufgenommenen Kommunikationskabels (3₁ - 3ₙ) an der zweiten Öffnung und Herausziehen des durchtrennten Kunststoffrohres (2₁ - 2ₙ) mit Kommunikationskabel (3₁- 3ₙ) an der ersten Öffnung, vollständig oder unter Bildung einer im Boden verbleibenden Schlaufe.

## Beschreibung

Die Erfindung bezieht sich auf einen Kabel-Rohrverband, nämlich auf einen Verband aus mehreren, durch einen sie gemeinsam umgebenden Mantel zusammengefassten Kunststoffrohren, welche jeweils ein zur Herstellung eines Kommunikationsanschlusses vorgesehenes Kommunikationskabel aufnehmen.

Gegenstände der Erfindung sind ferner ein Verfahren zur Herstellung des erfindungsgemäßen Kabel-Rohrverbandes und ein spezielles Verfahren für dessen Verlegung im Sinne der Bereitstellung eines Kommunikationskabels für jeweils ein, zu einer Mehrzahl einander benachbart angeordneter Grundstücke gehörendes Grundstück, zum Zweck der sofortigen oder erst zu einem späteren Zeitpunkt erfolgenden Herstellung eines Anschlusses des betreffenden Grundstücks an ein Kommunikationsnetz.

Grundsätzlich erscheint eine Übertragung des vorgestellten Erfindungsprinzips auch auf die Verlegung nicht der Kommunikation dienender Kabel möglich, soweit diese in Rohrverbänden verlegt werden. Jedoch erfordern das zur Verlegung eines Kabels beziehungsweise zur Bereitstellung eines Kabels vorgeschlagene Verfahren eine gewisse Flexibilität des Kabels und eine Eignung dazu auch in engeren Biegeradien verlegt werden zu können. Dies wird jedoch bei einigen Kabeln, wie insbesondere bei im Allgemeinen recht starren Erdkabeln zur Stromversorgung häufig nicht gegeben sein, weshalb die Erfindung im Zusammenhang mit dem beanspruchten Kabel-Rohrverband und hinsichtlich der Bereitstellung eines Kabels für jeweils ein, zu einer Mehrzahl Grundstücken gehörendes Grundstück auf Kommunikationskabel Bezug nimmt.

Im Hinblick auf ein für die Verlegung von Glasfaserkabeln bereits bekannt gewordenes Verfahren bezieht sich die Erfindung dabei insbesondere auf Glasfaserkabel, das heißt auf einen Kabel-Rohrverband mit Glasfaserkabeln und ein Verfahren zu Bereitstellung eines jeweiligen Glasfaserkabels des Kabel-Rohrverbandes an einem beziehungsweise für ein Grundstück zur Herstellung eines Kommunikationsanschlusses. Obwohl die Erfindung hinsichtlich der durch die Kunststoffrohre des Kabel-Rohrverbandes aufgenommenen Kommunikationskabel ausdrücklich nicht auf Glasfaserkabel beschränkt ist, sollen sich die nachfolgenden Darstellungen im Hinblick auf die bevorzugte Anwendung der Erfindung im Zusammenhang mit der Verlegung von Glasfaserkabeln insbesondere auf Kabel-Rohrverbände mit Glasfaserkabeln beziehen.

Bei der Verlegung von Glasfaserkabeln zur Bereitstellung von Kommunikationsanschlüssen ist es üblich, ein entsprechendes Glasfaserkabel in ein zuvor im Erdreich verlegtes Leerrohr aus Kunststoff einzubringen. Dabei ist es auch bekannt, mehrere derartige, zur Aufnahme je eines Glasfaserkabels vorgesehene Kunststoffrohre mittels eines die Kunststoffrohre umgebenden gemeinsamen Mantels zu einem Kabel-Rohrverband zusammenzufassen. Ein solcher Rohrverband wird im Erdreich verlegt und kann dann je nach Bedarf mit entsprechenden Glasfaserkabeln bestückt werden.

Ein Kabel-Rohrverband zur nachträglichen Bestückung mit Glasfaserkabeln wird beispielsweise durch die US 2005/019 4578 A1 beschrieben. In der Druckschrift wird ein Kabel-Rohrverband aus einer Mehrzahl von Rohren beschrieben, die gemeinsam von einem textilen Mantel umhüllt sind. Zur Unterstützung der nachträglichen Bestückung der Rohre des Verbandes mit den Glasfaserkabeln ist in die Rohre jeweils herstellerseitig eine Zugschnur eingebracht, mittels derer die Glasfaserkabel in die Leerrohre hineingezogen werden können.

Hinsichtlich des nachträglichen Einbringens von Glasfaserkabeln in Leerrohre, respektive in entsprechende Kunststoffrohre, ist es darüber hinaus bekannt geworden, die Glasfaserkabel mittels einer Einblasvorrichtung in die Kunststoffrohre einzublasen. Durch die DE 10 2004 059 593 wird ein unter anderem zur nachträglichen Einbringung von Glasfaserkabeln vorgesehener, gas- und wasserdruckresistenter Kabel-Rohrverband beschrieben. Zur einfacheren Verlegung in unterschiedlich geformten Schächten oder Kanälen ist der Verband hinsichtlich seiner äußeren Gestalt variabel verformbar. Gemäß der Schrift werden die Kabel vorzugsweise in die Leerrohre eingeblasen.

In der Praxis gestaltet sich dies so, dass ein eine hinreichend große Zahl von Leerrohren aufweisender, also zunächst noch nicht mit Glasfaserkabeln bestückter Kabel-Rohrverband in eine durch zuvor ausgeführte Erdarbeiten geschaffene Kabeltrasse eingebracht, also in der Erde verlegt wird. An den entlang einer solchen Kabeltrasse gelegenen Grundstücken, welche durch das den Kabel-Rohrverband bereitstellende Unternehmen mit einem Kommunikationsanschluss versorgt werden sollen, werden entsprechende Abzweige geschaffen. Nach der Schaffung dieser Abzweige werden in die Leerrohre des Kabel-Rohrverbandes, so auch in die aus diesem abzweigenden Kunststoffrohre, vor Ort an der Baustelle in entsprechender Anzahl die Glasfaserkabel in die Leerrohre (Kunststoffrohre) eingebracht, zum Beispiel eingeblasen. Häufiger bleibt dabei eine größere Zahl von Leerrohren, respektive Kunststoffrohren, des Kabel-Rohrverbandes zunächst unbestückt. Diese unbestückten, überzähligen Leerrohre können später dazu genutzt werden, im Nachhinein Glasfaserkabel in Kunststoffrohre des Kabel-Rohrverbandes zur Versorgung weiterer, an der Kabeltrasse gelegener Grundstücke mit einem Kommunikationsanschluss des Betreibers des Kabel-Rohrverbandes einzubringen.

Nachteilig ist es hierbei, dass das Einbringen der Glasfaserkabel vor Ort an der Baustelle mit einem nicht unerheblichen Montageaufwand verbunden ist. Letzteres gilt vor allen Dingen dann, wenn die Versorgung eines oder weniger Grundstücke durch das den Kabel-Rohrverband bereitstellende Unternehmen erst später, also im Nachhinein, zu einem gegenüber der grundlegenden Erschließung nachgelagerten Ausführungstermin erfolgen soll. Hierbei ist es dann insbesondere erforderlich, das Erdreich sowie den Kabel-Rohrverband an entsprechenden Übergangsstellen erneut zu öffnen und für den Vorgang des Einblasens der im Nachhinein einzufügenden Glasfaserkabel das erforderliche Equipment, nämlich beispielsweise eine oder mehrere Einblasvorrichtungen, zur Ausführung der Arbeiten mitzuführen. Das heißt, insbesondere das nachträgliche Bereitstellen von Glasfaserkabeln zur Herstellung eines Kommunikationsanschlusses verursacht einen beträchtlichen logistischen Aufwand und Montageaufwand vor Ort an der Baustelle.

Aufgabe der Erfindung ist es, die vorgenannten Nachteile zu vermeiden. Durch eine entsprechende Lösung soll insbesondere der Montageaufwand vor Ort auf der Baustelle deutlich reduziert werden.

Die Aufgabe wird mit Hilfe eines durch den Patentanspruch 1 charakterisierten Kabel-Rohrverbandes und eines speziellen Verlegeverfahrens gemäß dem unabhängigen, sich auf die Bereitstellung mindestens eines Kommunikationskabels zur Herstellung eines Kommunikationsanschlusses beziehenden Patentanspruchs gelöst. Teil der Lösung ist außerdem ein Verfahren zur Herstellung des erfindungsgemäßen Kabel-Rohrverbandes.

Bei dem zur Lösung der Aufgabe vorgeschlagenen Kabel-Rohrverband handelt es sich, wie grundsätzlich bereits bekannt, um einen Verband aus mehreren, mittels eines sie gemeinsam umgebenden Mantels zusammengefassten Kunststoffrohren, welche jeweils ein, innerhalb des jeweiligen Kunststoffrohres bewegliches Kommunikationskabel, vorzugsweise ein Glasfaserkabel, aufnehmen. Abweichend vom Stand der Technik wird jedoch dieser Kabel-Rohrverband zur Verlegung mit bereits herstellerseitig in dessen Kunststoffrohre eingefügten Kommunikationskabeln, respektive Glasfaserkabeln, bereitgestellt. Die Verwendung eines solchen bereits mit Kommunikationskabeln beziehungsweise Glasfaserkabeln bestückten Kabel-Rohrverbandes zur Bereitstellung von Kommunikationskabeln für die Herstellung von Kommunikationsanschlüssen erfordert eine spezielle, später noch darzustellende Verlegetechnik.

Soweit es sich bei den Kommunikationskabeln des Kabel-Rohrverbandes um Glasfaserkabel handelt, sind diese vorzugsweise als Glasfaser-Minikabel oder Glasfaser-Mikrokabel ausgeführt. Zudem sind die Kunststoffrohre des Kabel-Rohrverbandes vorzugsweise derart ausgebildet, dass sie an ihren Innenflächen, verteilt auf dem Umfang, mehrere sich jeweils in der Rohrlängsrichtung über ihre gesamte Länge erstreckende Riefen aufweisen. Durch die Riefen wird die Gleitreibung zwischen den Kunststoffrohren und dem Mantel des jeweiligen von ihnen aufgenommenen Kommunikationskabels verringert und so die Beweglichkeit der Kabel innerhalb der Kunststoffrohre erhöht.

Bei den vorstehend angesprochenen Glasfaser-Minikabeln beziehungsweise Glasfaser-Mikrokabeln handelt es sich um Kabel mit einem vereinfachten Aufbau, aber mit ansonsten voller Funktionalität, welche außerdem einen deutlich reduzierten Durchmesser aufweisen. Aufgrund dieses, unter anderem auch durch geringe Stärken des Kabelmantels reduzierten Durchmessers, sind derartige Kabel insbesondere auch für das bereits erwähnte, aus dem Stand der Technik bekannte Einblasen in Leerrohre geeignet. Gemäß dem hier zugrunde gelegten Verständnis weisen dabei Glasfaser-Minikabel einen Durchmesser von ≤ 6,50 mm (2,70 mm - 6,50 mm) auf, wohingegen Glasfaser-Mikrokabel sogar Durchmesser von ≤ 2,60 mm aufweisen.

Der zur Lösung der Aufgabe vorgeschlagene Kabel-Rohrverband wird erfindungsgemäß in der Weise hergestellt, dass die Kommunikationskabel, also vorzugsweise die Glasfaserkabel, im Zuge eines zur Herstellung der Kunststoffrohre erfolgenden Extrusionsvorgangs in die Kunststoffrohre (Leerrohre) eingebracht werden. Hierbei können die Leerrohre und der Mantel der Kommunikationskabel (beispielsweise Glasfaserkabel) aus gleichem Material, beispielsweise aus Polyethylen (PE) hoher Dichte bestehen. Entsprechend einer anderen vorteilhaften Möglichkeit bestehen die Leerrohre aus PE und der Kunststoffmantel der Kommunikationskabel aus einem Kunststoff, welcher auch in Bezug auf Temperaturen oberhalb der Extrusionstemperatur zur Herstellung der Kunststoffrohre temperaturbeständig ist, wie beispielsweise Polyamid. In jedem Fall ist es erforderlich zu verhindern, dass der Mantel der Kommunikationskabel während des Extrusionsvorgangs zur Erzeugung eines jeweiligen Kunststoffrohres an dessen Innenfläche anklebt beziehungsweise mit der Innenfläche verschmilzt, um die Beweglichkeit der Kommunikationskabel innerhalb des jeweiligen Leerrohres zu gewährleisten. Insoweit sollte zwischen einem Leerrohr und dem Mantel des von ihm aufgenommenen Kommunikationskabels eine möglichst geringe Gleitreibung gegeben sein.

Das bereits angesprochen Verlegeverfahren, also das Verfahren zur Bereitstellung mindestens eines Kommunikationskabels (insbesondere eines Glasfaserkabels) zur Herstellung eines Kommunikationsanschlusses, geht von einer Herstellung eines solchen Kommunikationsanschlusses für jeweils ein, zu einer Mehrzahl entlang einer Kabeltrasse benachbart angeordneter Grundstücke gehörendes Grundstück aus. Das Verfahren weist hierbei die folgenden Verfahrensschritte auf:
1. Verlegen des Kabel-Rohrverbandes in der vorgenannten Kabeltrasse, indem hierbei im Wege einer Erdverlegung die Verlegung eines Verbandes von in ihrer Anzahl mindestens der Anzahl der für die einander benachbarten Grundstücke bereitzustellenden Kommunikationskabel entsprechenden Kunststoffrohren erfolgt, wobei die Kunststoffrohre, dem Grundgedanken der Erfindung folgend, bereits mit jeweils einem Kommunikationskabel bestückt sind.
2. Schaffen einer ersten Öffnung in dem Kabel-Rohrverband durch Öffnen des Mantels des Verbandes auf Höhe eines Grundstücks, für welches ein Kommunikationskabel zur Herstellung eines Kommunikationsanschlusses bereitzustellen ist.
3. Schaffen einer zweiten Öffnung in dem Kabel-Rohrverband durch Öffnen des Mantels des Kabel-Rohrverbandes in einer Entfernung von der ersten, gemäß Schritt 2 geschaffenen Öffnung, welche mindestens der Entfernung zwischen dieser ersten Öffnung und einem Kabelanschlusspunkt auf dem zu versorgenden Grundstück entspricht.
4. Auswahl und Durchtrennen eines Kunststoffrohres sowie des darin befindlichen Kommunikationskabels an der Stelle der und über die gemäß dem Schritt 3 in dem Mantel des Kabel-Rohrverbandes geschaffene zweite Öffnung.
5. Herausziehen des durchtrennten Kunststoffrohres mit dem von diesem aufgenommenen Kommunikationskabel aus dem Kabel-Rohrverband an der gemäß Schritt 2 geschaffenen ersten Öffnung, wobei das Herausziehen derart erfolgt, dass entweder das Kunststoffrohr mit dem darin befindlichen Kabel vollständig, das heißt einschließlich seines nach dem Durchtrennen freien Endes, aus dem Kabel-Rohrverband herausgezogen wird oder, dass lediglich ein Teil des durchtrennten Kunststoffrohres und des von ihm aufgenommenen Kommunikationskabels (vorzugsweise Glasfaserkabels) an der ersten Öffnung unter Ausbildung einer an dem Grundstück im Boden verbleibenden Schlaufe aus dem Rohrverband herausgezogen wird.

Sofern die erste, gemäß dem Verfahrensschritt 2 und die zweite, gemäß dem Verfahrensschritt 3 erzeugte Öffnung zueinander einen größeren Abstand aufweisen, ist es in Weiterbildung des Verfahrens vorgesehen, zwischen der ersten und der zweiten Öffnung weitere Öffnungen (im Folgenden, insbesondere zur sprachlichen Unterscheidung, auch als Zwischen-Öffnungen bezeichnet) in den Mantel des Kabel-Rohrverbandes einzubringen und das Kunststoffrohr mit dem Kommunikationskabel (Glasfaserkabel) abschnittsweise zunächst über diese weiteren Zwischen-Öffnungen und schließlich gemäß dem Verfahrensschritt 5 über die erste Öffnung aus dem Kabel-Rohrverband herauszuziehen.

Das Einbringen derartiger Zwischen-Öffnungen ist insbesondere in Betracht zu ziehen, sofern die erste, gemäß Verfahrensschritt 2 geschaffene Öffnung und die zweite, gemäß dem Verfahrensschritt 3 geschaffene Öffnung mehr als 20 m auseinanderliegen, da es in diesem Falle schwierig sein könnte, das Kunststoffrohr mit dem Kommunikationskabel (Glasfaserkabel) über diese Länge unmittelbar über die erste Öffnung aus dem Kabel-Rohrverband herauszuziehen.

Die zweite in dem Verfahrensschritt 5 angegebene Alternative, wonach ein Kunststoffrohr mit dem Kommunikationskabel unter Ausbildung einer im Boden an einem Grundstück verbleibenden Schlaufe aus dem Kabel-Rohrverband herausgezogen wird, dient der vorsorglichen Bereitstellung eines Kommunikationskabels für das betreffende Grundstück. Ein solche vorsorgliche Bereitstellung eines Kommunikationskabels geschieht, sofern dieses Grundstück zum Zeitpunkt der Ausführung der Verlegearbeiten zunächst noch nicht an das Kommunikationsnetz des Kommunikationsunternehmens angeschlossen werden soll, für welches der Kabel-Rohrverband verlegt wird. Ein späterer Anschluss des betreffenden Grundstücks ist dann mit geringem Aufwand möglich.

Wie bereits bei der vorstehenden Beschreibung und auch bei Charakterisierung des erfindungsgemäßen Kabel-Rohrverbandes in den Patentansprüchen ausgeführt, sind die Kommunikationskabel / die Glasfaserkabel innerhalb der sie jeweils aufnehmenden Kunststoffrohre des Kabel-Rohrverbandes, trotz der bereits herstellerseitig erfolgenden Bestückung der Kunststoffrohre mit den Kommunikationskabeln, beweglich. Bei der Herstellung des bereits herstellerseitig mit den Kommunikationskabeln bestückten Kabel-Rohrverbandes gemäß dem dazu vorgeschlagenen Verfahren wird dies beispielsweise dadurch sichergestellt, dass der Mantel der während eines Extrusionsvorgangs zur Erzeugung der Kunststoffrohre in diese eingefügten Kommunikationskabel eine Temperaturbeständigkeit aufweist, welche ein Verkleben oder Verschmelzen des ummantelten Kommunikationskabels mit der Innenfläche des jeweiligen Kunststoffrohres sicher verhindert. Die Beweglichkeit des Kommunikationskabels innerhalb des jeweiligen Kunststoffrohres ist im Hinblick auf den Schritt 5 des zuvor erläuterten Verlegeverfahrens erforderlich, da anderenfalls beim Herausziehens eines Kunststoffrohres und des darin enthaltenen Kabels aus dem Kabel-Rohrverband und/oder im Zusammenhang mit dem Legen einer durch das Kunststoffrohr und das Kabel gebildeten Schlaufe an oder auf einem zunächst nicht über ein Kabel des Kabel-Rohrverbandes angeschlossenen Grundstück das Kommunikationskabel mechanisch überbeansprucht und eventuell beschädigt werden könnte.

Wie aus der Beschreibung des Verlegeverfahrens unmittelbar klar wird, verbleiben jeweils der Rest eines an der zweiten Öffnung des Kabel-Rohrverbandes durchtrennten Kunststoffrohres und des darin enthaltenen Kommunikationskabels ungenutzt in der Erde. Dies ist mit erhöhten Materialkosten verbunden, wobei jedoch die Mehrkosten für das Material in vielen Fällen durch die Verringerung des Montageaufwands auf der Baustelle und den daraus auch resultierenden geringeren finanziellen Aufwand kompensiert oder vorzugsweise sogar überkompensiert werden können. Es wird aber insoweit möglicherweise jeweils für den Einzelfall eine sich an den Gegebenheiten vor Ort orientierende ökonomische Entscheidung zu treffen sein, ob die erfindungsgemäße Lösung oder eine bisher schon eingesetzte Verlegetechnik - beispielsweise mit dem nachträglichen Einblasen von Glasfaserkabeln in die Leerrohre eines Kabel-Rohrverbandes bekannter Ausbildung - zum Einsatz gelangt.

Anhand von Zeichnungen sollen nachfolgend ein Ausführungsbeispiel gegeben und die Erfindung nochmals erläutert werden. Die Zeichnungen zeigen im Einzelnen:
- Fig. 1:: die Verlegung eines erfindungsgemäßen Kabel-Rohrverbandes in einer Kabeltrasse entlang von fünf Grundstücken,
- Fig. 2a und 2b:: die Bereitstellung eines Glasfaserkabels für eines der Grundstücke zur Herstellung eines Kommunikationsanschlusses,
- Fig. 3:: die Gegebenheiten nach der Bereitstellung eines Glasfaserkabels für ein weiteres Grundstücks bei der Bebauungssituation gemäß der Figuren 1 und 2,
- Fig. 4:: die vorsorgliche Bereitstellung eines Glasfaserkabels für ein weiteres bebautes Grundstück und ein noch nicht bebautes Grundstück gemäß der Bebauungssituation nach den Figuren 1 bis 3,
- Fig. 5:: den Querschnitt einer beispielhaften Ausbildungsform eines Kabel-Rohrverbandes.

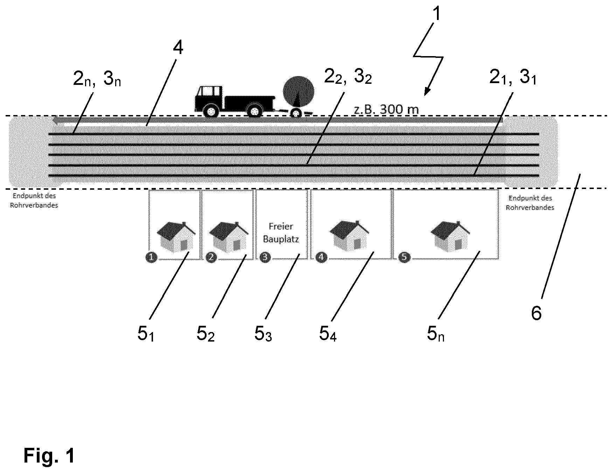

Die Fig. 1 zeigt die Verlegung eines erfindungsgemäßen Kabel-Rohrverbandes 1 im Erdboden entlang einer Kabeltrasse 6, welche entlang von fünf einander benachbarten Grundstücken 5₁ - 5ₙ verläuft. Ein Telekommunikationsunternehmen, durch welches oder in dessen Auftrag der Kabel-Rohrverband 1 verlegt wird, möchte für alle Grundstücke 5₁ - 5ₙ entlang der beispielsweise 300 m langen Kabeltrasse 6 zumindest vorsorglich - vorsorglich für den Fall, dass der Inhaber eines Grundstücks 5₁ - 5ₙ Telekommunikationsdienstleistungen dieses Unternehmens eventuell erst zu einem späteren Zeitpunkt in Anspruch nimmt - ein Glasfaserkabel (Kommunikationskabel 3₁ - 3ₙ) zur Herstellung eines Kommunikationsanschlusses bereitstellen.

In dem aus einer Mehrzahl von einem gemeinsamen Mantel 4 umgebenen Kunststoffrohren 2₁ - 2ₙ bestehenden Kabel-Rohrverband 1 sind alle Kunststoffrohre 2₁ - 2ₙ bereits herstellerseitig, nämlich im Zuge eines ihrer Herstellung dienenden Extrusionsvorgangs, mit je einem Glasfaserkabel 3₁ - 3ₙ bestückt worden. Der solchermaßen bereits komplett bestückte Kabel-Rohrverband 1 wird von einer Kabeltrommel abgerollt und entlang der im Beispiel fünf Grundstücke 5₁ - 5ₙ erdverlegt.

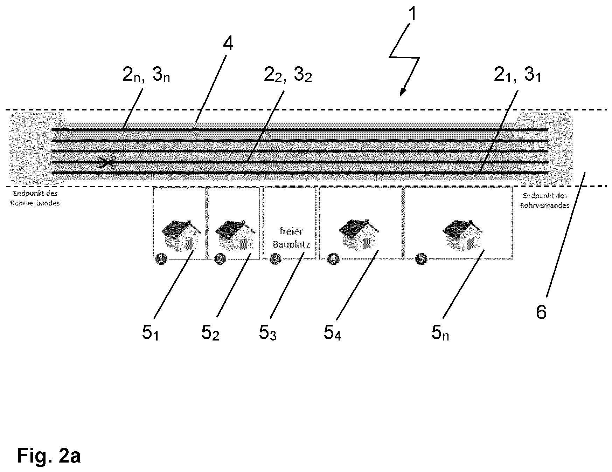

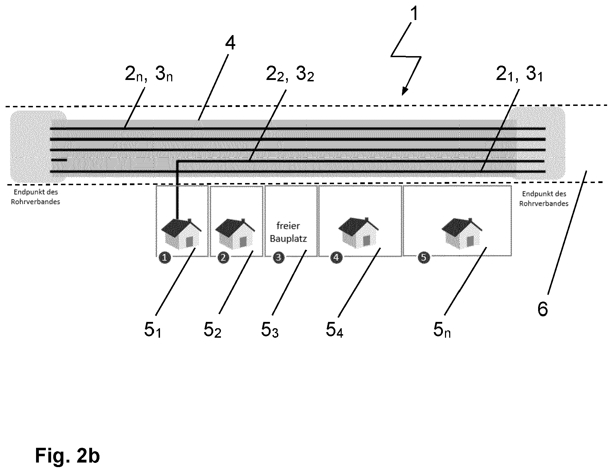

Die Figuren 2a und 2b zeigen beispielhaft die Bereitstellung eines Glasfaserkabels 3₁ - 3ₙ aus dem in der Kabeltrasse 6 verlegten Kabel-Rohrverband 1 für eines der fünf an der Kabeltrasse 6 gelegenen Grundstücke 5₁ - 5ₙ. Auf der Höhe dieses Grundstücks 5₁ wird - hier im Detail nicht näher gezeigt - eine erste Öffnung in den Mantel 4 des Kabel-Rohrverbandes 1 eingebracht. Im weiteren Verlauf des Kabel-Rohrverbandes 1, hier links von dem Grundstück 5₁, wird in einer Entfernung, welche mindestens der Entfernung zwischen der ersten, auf der Höhe des Grundstücks 5₁ eingebrachten Öffnung und einem auf diesem Grundstück 5₁ vorgesehenen Anschlusspunkt für ein Kommunikationskabel 3₁ - 3ₙ entspricht, eine zweite Öffnung in den Mantel 4 des Kabel-Rohrverbandes 1 eingebracht (ebenfalls nicht im Detail gezeigt). Durch diese zweite Öffnung hindurch werden dann ein Kunststoffrohr 2₂ und das von diesem aufgenommene Glasfaserkabel 3₂ (angedeutet durch das Scherensymbol) durchtrennt. Das durchtrennte Kunststoffrohr 2₂ mit dem Glasfaserkabel 3₂ wird schließlich an der ersten Öffnung auf Höhe des Grundstücks 5₁, für welches das Glasfaserkabel 3₂ bereitzustellen ist, vollständig aus dem Kabel-Rohrverband 1 herausgezogen sowie bis zu einem auf dem Grundstück 5₁ dafür vorgesehenen (nicht gezeigten) Anschlusspunkt verlegt. Das entsprechende, zuvor durchgetrennte Kunststoffrohr 2₂ kann zum Beispiel an einer Farbmarkierung beziehungsweise an einem Farbcode (beispielsweise nach VDE) erkannt werden.

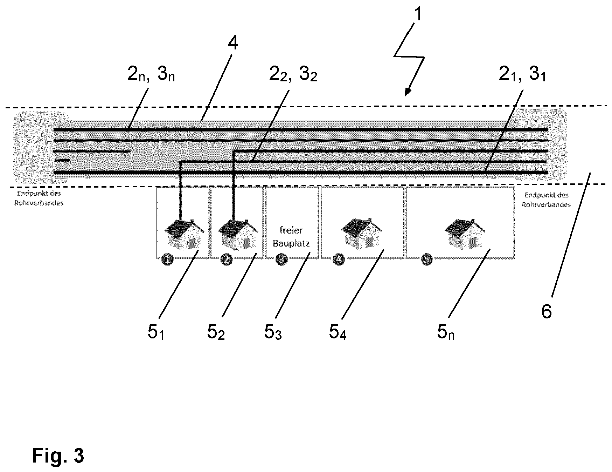

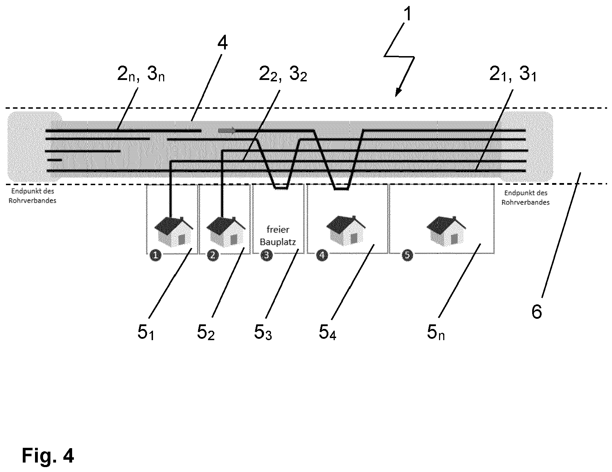

Unter Wiederholung des zuvor erläuterten Ablaufs werden für weitere Grundstücke 5₁ - 5ₙ, die bereits unmittelbar mit einem Anschluss versorgt werden sollen, Glasfaserkabel 3₁ - 3ₙ herausgezogen und verlegt. Die Fig. 3 zeigt dies beispielhaft in Bezug auf ein weiteres Grundstück, das Grundstück 5₂. Aber auch für Grundstücke 5₁ - 5ₙ, die entweder noch gar nicht bebaut sind oder für die zunächst noch kein Anschluss an das Netz des Telekommunikationsunternehmens vorgesehen ist, welches oder für welches der Kabel-Rohrverband 1 in die Kabeltrasse eingebracht wurde, wird bereits vorsorglich ein Glasfaserkabel 3₁ - 3ₙ für den eventuellen späteren Anschluss bereitgestellt. Hierbei unterscheidet sich die zur Fig. 1 erläuterte Vorgehensweise lediglich darin, dass das jeweilige, vorsorglich bereitgestellte Glasfaserkabel 3₁ - 3ₙ nicht vollständig, sondern zusammen mit dem dieses aufnehmenden Kunststoffrohr 2₁ - 2ₙ unter Ausbildung einer Schlaufe auf Höhe des jeweiligen Grundstücks 5₁ - 5ₙ herausgezogen wird. Diese Situation ist in der Fig. 4 in Bezug auf ein noch nicht bebautes Grundstück 5₃ und auf ein zwar bebautes Grundstück 5₄, welches aber zunächst noch nicht angeschlossen werden soll, dargestellt. Auch für die vorsorglich bereitgestellten Glasfaserkabel 3₁ - 3ₙ wird in den Kabel-Rohrverband 1 beziehungsweise in dessen Mantel 4 jeweils eine zweite Öffnung eingebracht und das jeweilige Glasfaserkabel 3₁ - 3ₙ dort durchtrennt.

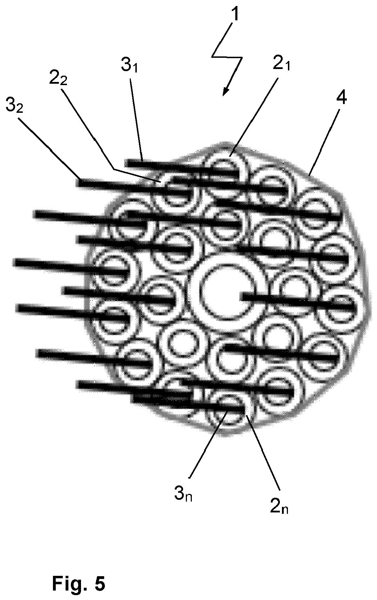

Die Fig. 5 zeigt beispielhaft einen Querschnitt einer möglichen Ausbildungsform des Kabel-Rohrverbandes 1. Zu erkennen sind hier die zu dem Kabel-Rohrverband 1 zusammengefassten Kunststoffrohre 2₁ - 2ₙ, der diese umgebende Mantel 4 des Kabel-Rohrverbandes 1 sowie die von den Kunststoffrohren 2₁ - 2ₙ aufgenommenen Glasfaserkabel 3₁ - 3ₙ. Letztere werden bereits herstellerseitig in die Kunststoffrohre 2₁ - 2ₙ eingebracht, was vorzugsweise im Zuge eines Extrusionsprozesses zur Herstellung der Kunststoffrohre 2₁ - 2ₙ erfolgt.

## Patentansprüche

1. Kabel-Rohrverband (1) aus mehreren, durch einen sie gemeinsam umgebenden Mantel (4) zu dem Verband zusammengefassten Kunststoffrohren (2₁ - 2ₙ), welche jeweils ein, innerhalb des jeweiligen Kunststoffrohres (2₁ - 2ₙ) bewegliches Kommunikationskabel (3₁ - 3ₙ) aufnehmen, **dadurch gekennzeichnet, dass** der Kabel-Rohrverband (1) zur Verlegung mit bereits herstellerseitig in dessen Kunststoffrohre (2₁ - 2ₙ) eingefügten Kommunikationskabeln (3₁ - 3ₙ) bereitgestellt wird.

2. Kabel-Rohrverband (1) nach Anspruch 1, **dadurch gekennzeichnet, dass** es sich bei dessen Kommunikationskabeln (3₁ - 3ₙ) um Glasfaserkabel handelt.

3. Kabel-Rohrverband (1) nach Anspruch 2, **dadurch gekennzeichnet, dass** die Glasfaserkabel als Glasfaser-Minikabel oder Glasfaser-Mikrokabel ausgeführt sind.

4. Kabel-Rohrverband (1) nach einem der Ansprüche 1 bis 3, **dadurch gekennzeichnet, dass** dessen Kunststoffrohre (2₁ - 2ₙ) an ihren Innenflächen mehrere sich jeweils in der Rohrlängsrichtung über ihre gesamte Länge erstreckende Riefen aufweisen.

5. Verfahren zur Herstellung eines Kabel-Rohrverbandes (1) gemäß Anspruch 1, **dadurch gekennzeichnet, dass** die Kommunikationskabel (3₁ - 3ₙ) im Zuge eines Extrusionsvorgangs zur Herstellung der Kunststoffrohre (2₁ - 2ₙ) in die Kunststoffrohre (2₁ - 2ₙ) eingebracht werden.

6. Verfahren nach Anspruch 5, **dadurch gekennzeichnet, dass** für den Kunststoffmantel der Kommunikationskabel (3₁ - 3ₙ) ein Kunststoff verwendet wird, welcher eine oberhalb der Extrusionstemperatur zur Herstellung der Kunststoffrohre (2₁ - 2ₙ) liegende Temperaturbeständigkeit aufweist.

7. Verfahren zur Bereitstellung mindestens eines Kommunikationskabels (3₁ - 3ₙ) zur Herstellung eines Kommunikationsanschlusses für jeweils ein, zu einer Mehrzahl entlang einer Kabeltrasse (6) benachbart angeordneter Grundstücke (5₁ - 5ₙ) gehörendes Grundstück, mit den Verfahrensschritten
a.) Verlegen des Kabel-Rohrverbandes (1) in der Kabeltrasse (6), nämlich Erdverlegung eines Verbandes von in ihrer Anzahl mindestens der Anzahl der für die einander benachbarten Grundstücke (5₁ - 5ₙ) bereitzustellenden Kommunikationskabel (3₁ - 3ₙ) entsprechenden, bereits mit je einem Kommunikationskabel (3₁ - 3ₙ) bestückten Kunststoffrohren (2₁ - 2ₙ),
b.) Schaffen einer ersten Öffnung in dem Kabel-Rohrverband (1) durch Öffnen seines Mantels (4) auf Höhe eines Grundstücks (5₁ - 5ₙ), für welches ein Kommunikationskabel (3₁ - 3ₙ) für einen Kommunikationsanschluss bereitzustellen ist,
c.) Schaffen einer zweiten Öffnung in dem Kabel-Rohrverband (1) durch Öffnen des Mantels (4) in einer Entfernung von der ersten gemäß Schritt b.) geschaffenen Öffnung, welche mindestens der Entfernung zwischen dieser ersten Öffnung und einem Kabelanschlusspunkt auf dem Grundstück (5₁ - 5ₙ) entspricht, für welches das Kommunikationskabel (3₁ - 3ₙ) zur Herstellung eines Kommunikationsanschlusses bereitzustellen ist,
d.) Auswahl und Durchtrennen eines Kunststoffrohres (2₁ - 2ₙ) sowie des darin befindlichen Kommunikationskabels (3₁ - 3ₙ) über die zweite, gemäß Schritt c) in dem Mantel (4) des Kabel-Rohrverbandes (1) geschaffene Öffnung,
e.) Herausziehen des gemäß Schritt d) durchtrennten Kunststoffrohres (2₁ - 2ₙ) mit dem von diesem aufgenommenen Kommunikationskabel (3₁ - 3ₙ) aus dem Kabel-Rohrverband (1) an der ersten, gemäß Schritt b) geschaffenen Öffnung, nämlich Herausziehen des Kunststoffrohres (2₁ - 2ₙ) mit dem Kommunikationskabel (3₁ - 3ₙ) einschließlich seines freien Endes oder unter Ausbildung einer an dem Grundstück (5₁ - 5ₙ) im Boden verbleibenden von dem Kunststoffrohr (2₁ - 2ₙ) und dem Kommunikationskabel (3₁ - 3ₙ) gebildeten Schlaufe.

8. Verfahren nach Anspruch 7, **dadurch gekennzeichnet, dass** zwischen den in den Schritten b.) und c) geschaffenen Öffnungen, das heißt zwischen der ersten und der zweiten Öffnung, weitere Zwischen-Öffnungen in den Mantel (4) des Kabel-Rohrverbandes (1) eingebracht werden und das Kunststoffrohr (2₁ - 2ₙ) mit dem Kommunikationskabel (3₁ - 3ₙ) abschnittsweise zunächst über diese weiteren Öffnungen und schließlich gemäß Schritt e) über die erste Öffnung aus dem Kabel-Rohrverband (1) herausgezogen wird.
